# EUROPEAN PATENT SPECIFICATION

(11) **EP 3 852 674 B1**
(45) Date of publication and mention of the grant of the patent: **19.02.2025**
(21) Application number: 19773192.0
(22) Date of filing: 17.09.2019
(51) Int. Cl.: A61C 5/85, A61C 5/77, A61C 5/20, A61C 5/80, A61C 13/107

(54) **DENTAL RESTORATION MOLDS, KIT AND METHOD**
ZAHNRESTAURATIONSFORMEN,KIT UND VERFAHREN
MOULES, KIT ET PROCEDURE DE RESTAURATION DENTAIRE

(30) Priority: 18.09.2018 US 201862732889 P
(43) Date of publication of application: 28.07.2021
(73) Proprietor: Solventum Intellectual Properties Company, Maplewood, MN 55144 (US)
(72) Inventor: KOKAISEL, Christopher R., Saint Paul, Minnesota 55133-3427 (US); PILGRIM, John M., Saint Paul, Minnesota 55133-3427 (US); DINGELDEIN, Joseph C., Saint Paul, Minnesota 55133-3427 (US); LANGUELL, Katelyn M., Saint Paul, Minnesota 55133-3427 (US); HANSEN, James D., Saint Paul, Minnesota 55133-3427 (US)
(74) Representative: Vossius & Partner Patentanwälte Rechtsanwälte mbB
(86) International application number: PCT/IB2019/057832
(87) International publication number: WO 2020/058855

(56) References cited:
- WO-A1-2016/094272
- WO-A1-2017/106431
- WO-A1-2018/022616
- US-A1- 2013 130 202

## Description

### Background

A dental restoration, or a dental filling, utilizes a restorative dental material used to improve function, integrity and morphology of missing or irregular tooth structure. For example, a dental restoration may be used to restore missing tooth structure due to congenital discrepancies, following external trauma, as part of a restorative treatment for dental caries, or tooth decay or for aesthetic reasons..

Restorative dentistry often includes drilling decay from an infected tooth (commonly referred to as "preparing" the tooth) and then using simple tools and a high level of craftsmanship to isolate, retract, fill and contour the finished restoration. Quality isolation via a rubber dam is cumbersome and often skipped for less effective isolation via cotton rolls - increasing the risk of contamination which reduces longevity of the restoration. Retraction of soft and hard tissue includes manipulation of cords, wedges and matrix bands, and imperfect technique may result in contamination, difficulty in finishing and/or polishing in interproximal areas, and poorly adapted contacts.

While 'bulk fill' restorative materials and high intensity curing lights facilitate relatively fast filling of deep cavities (e.g., 4-5 mm), many restorations are completed in a single shade as practitioners may be uncertain of the correct layering protocol for multiple shades or types of restorative material. Last, with little geometrical guidance available on a prepared tooth, creation of the final filling level and occlusal surface geometry may include overfilling with restorative dental material, followed by an iterative process of grinding and checking tooth contact and biting function on an anesthetized patient. This process may be the most time consuming for dental restorations and errors here may result in tooth sensitivity and return visits for adjustment.

Commonly-assigned patent applications United States Patent Publ. No. 2018/0021113, titled "Dental Restoration Molding Techniques," filed December 7, 2015, United States Patent Application Serial No. 16/061362, titled "One-Piece Dental Restoration Molds," filed December 15, 2016, United States Patent Application Serial No. 16/061350, titled "Dental Restoration Molds," filed December 15, 2016, WO 2018/022616 Publ. No., titled "Dental Restoration Molds," filed July 25, 2017, and United States Patent Provisional Application Serial No. 62/560457, titled "Dental Restoration Molds," filed September 19, 2017, United States Patent Provisional Serial No. 62/717485, titled "Dental Restoration Molds," and United States Patent Provisional Serial No. 62/717506, titled "Dental Restoration Molds," both filed August 10, 2018 all disclose dental restoration techniques incorporating the molding of dental restorative material directly on a tooth located within the mouth of a patient.

WO 2018/022616 A1 describes a tool for forming a dental restoration including a mold body configured to provide a customized fit with at least one tooth of a patient. The mold body defines an aperture configured to align with a portion of a surface of a tooth. The aperture is sufficiently large to allow placement and flow of restorative material over the desired portion of the surface of the tooth to be restored. The mold body is configured to combine with the at least one tooth of the patient to define a mold cavity encompassing at least a portion of desired tooth structure of the tooth to be restored.

WO 2016/094272 A1 relates to a custom tool for forming a dental restoration in a mouth of a patient including a mold body providing for a customized fit with at least one tooth of the patient. The mold body includes a facial portion forming a facial surface corresponding with a facial surface of the tooth, and a separate lingual portion forming a lingual surface corresponding with a lingual surface of the tooth. The mold body is configured to combine with the tooth of the patient to form a mold cavity encompassing missing tooth structure of the tooth.

### Summary

The invention for which protection is sought is defined by the independent claims. The dependent claims concern particular embodiments.

This disclosure relates to methods for dental restoration, custom tools used for dental restoration and techniques for producing custom tools for dental restoration In one example, the disclosure is directed to a custom tool for forming a dental restoration in a mouth of a patient. The custom tool comprises: a mold body for a patient-specific, customized fit with the facial side and the lingual side of at least two adjacent teeth of the patient, wherein the mold body comprises: a first facial mold portion for a patient-specific, customized fit with the facial side of a first tooth of the patient; a second facial mold portion for a patient-specific, customized fit with the facial side of a second tooth of the patient adjacent the first tooth; a first lingual mold portion for a patient-specific, customized fit with the lingual side of the first tooth of the patient; a second lingual mold portion for a patient-specific, customized fit with the lingual side of the second tooth of the patient; at least one flexible film, wherein the mold body is configured to combine with the at least one flexible film to form a mold cavity encompassing missing tooth structure of at least one tooth to be restored.

In another example, the custom tool comprises: a mold body for a patient-specific, customized fit with the facial side and the lingual side of at least two adjacent teeth of the patient, wherein the mold body comprises: a first facial mold portion for a patient-specific, customized fit with the facial side of a first tooth of the patient; a second facial mold portion for a patient-specific, customized fit with the facial side of a second tooth of the patient adjacent the first tooth; a first lingual mold body for a patient-specific, customized fit with the lingual side of the first tooth of the patient, a second lingual mold body for a patient-specific, customized fit with the lingual side of the second tooth of the patient; a flexure connecting the first lingual mold body to the second lingual mold body; a first midline guide; a first flexible film; wherein the mold body is configured to combine with the flexible film to form a mold cavity encompassing missing tooth structure of at least one tooth to be restored; and wherein the flexible film is in contact with the first midline guide.

In further examples, this disclosure is directed to methods of forming a dental restoration, and methods of designing a custom tool for forming a dental restoration of a tooth.

The custom tools and methods described herein may be used in combination with any of the previously described examples to create full, partial, or sequential restorations in the mouth of a patient.

### Brief Description of the Drawings

Figure 1 is a perspective view of one embodiment of a custom tool for forming a dental restoration in a mouth of a patient of the present invention;
Figure 2 is a front view of the custom tool of Figure 1;
Figures 3 is a rear view of the custom tool of Figure 1;
Figure 4 is a top view of the custom tool of Figure 1;
Figure 5 is a perspective view of the custom tool of Figure 1 in the mouth of a patient;
Figure 6 is perspective view of the custom tool in the mouth of the patient shown in Figure 5 including a flexible film;
Figure 7A is a front view of the mouth of the patient shown in Figure 5 prior to restoration;
Figure 7B is a front view of the mouth of the patient shown in Figure 6 prior to restoration, with the custom tool removed to help illustrate the position of the flexible film;
Figure 7C is a front view of the mouth of the patient shown in Figure 7B showing the dental restoration;
Figure 7D is a front view of the mouth of the patient shown in Figure 7C showing the dental restoration after the custom tool and flexible film have been removed;
Figure 8 is a perspective view of another embodiment of a custom tool for forming a dental restoration in a mouth of a patient of the present invention;
Figure 9 is a front view of the custom tool of Figure 8;
Figures 10 is a rear view of the custom tool of Figure 8;
Figure 11 is a top view of the custom tool of Figure 8;
Figure 12 is a perspective view of the custom tool of Figure 8 in the mouth of a patient including flexible films;
Figure 13A is a front view of the mouth of the patient shown in Figure 12 prior to restoration;
Figure 13B is a front view of the mouth of the patient shown in Figure 12 -prior to restoration, with one portion of the custom tool removed to help illustrate the position of the flexible film;
Figure 13C is a front view of the mouth of the patient shown in Figure 13B showing the dental restoration; and
Figure 13D is a front view of the mouth of the patient shown in Figure 13C showing the dental restoration after the custom tool and flexible film have been removed;

### Detailed Description

Restorative dentistry may be used to add tooth structure to a patient's dentition, e.g., to an existing tooth, in order to improve at least one of function, integrity, aesthetics, or morphology of missing or irregular tooth structure. For example, restorative dentistry can be an aesthetic treatment to improve appearance of teeth by, for example, altering their shape and/or optical properties (e.g., shade, translucency), which can be achieved using any suitable technique, such as by applying a veneer, managing position or contour of adjacent soft tissues, lessening or removing a gap (diastema) and/or resolving the appearance of malposition. As another example, restorative dentistry may be used to adjust the biting or chewing function of teeth to affect tooth function and/or other aspects of overall oral health such as temporomandibular joint (TMJ) disorders, excessive wear, periodontal involvement, gingival recession or as part of a larger plan to construct a healthy and stable oral environment.

In some cases, a dental restoration process includes drilling decay from an infected tooth or reshaping teeth by removing undesired tooth structure (e.g., which may be referred to as "preparing" the tooth) and then using tools and craftsmanship to manually isolate, retract, fill and contour the finished restoration.

Different techniques may be used to isolate the dental restoration site. Quality isolation of the dental restoration site via a rubber dam can be cumbersome and may be skipped for less effective isolation via cotton rolls, which may increase the risk of contamination, reduce longevity of the restoration, or both. Retraction of soft and hard tissue may include manipulation of cords, wedges and matrix bands. Imperfect retraction techniques may result in contamination, difficulty in achieving proper tooth contours and symmetry, finishing and/or polishing in interproximal areas, poorly adapted contacts, or any combination thereof.

While "bulk fill" restorative materials and high intensity curing lights may facilitate relatively fast filling of deep cavities (e.g., 4-5 mm), many restorations may be completed in a single shade as practitioners may be uncertain of the correct layering protocol for multiple shades or types of restorative material. Additionally, with little geometrical guidance available on a prepared tooth, creation of the final filling level and occlusal surface geometry may include overfilling with restorative dental material, followed by an iterative process of grinding and checking tooth contact and biting function on an anesthetized patient. This process may be the most time consuming for dental restorations and errors here may result in tooth sensitivity and return visits for adjustment.

The tools described herein may include features designed to provide interferences between a custom mold and flexible films, which combine together to provide a mold cavity that is particularly suitable for restoring teeth with appropriate interproximal contacts between adjacent teeth. Such interferences are digitally designed into the custom mold is when it is designed and produced. Traditional molds do not have digitally designed interferences. To interlock together or separate the two mold portions from each other, they may need to deform or bend. In addition, the tools described herein may eliminate the need for external tools, like ring clamps, and are instead self-contained and thus, quicker and simpler to install on a patient's teeth. Lastly, the tools described herein may reduce flash and/or to allow increased control of the placement of restorative material compared to practitioners using more traditional skills, tools and techniques.

In some examples, a tool described herein may be digitally designed. For example, a tool may be designed using a three-dimensional (3D) model of the patient's tooth structure (e.g., obtained from an intraoral scan of all or part of the patient's dentition or scanning of a conventional impression or model). The tool can be, for example, manufactured from the digital data using an additive technique, such as 3D printing, or a subtractive technique, such as CAD/CAM milling.

In some examples, the tool for a dental restoration may include a mold designed based on the 3D model of the patient's tooth structure and may include additional features to provide advantages over molds that are formed based simply on the 3D scan, a wax up model, or other molds based simply on the shape of the anatomy and/or desired tooth structure of the patient. The disclosed techniques may facilitate high quality dental restorations with improved quality, reduced flash, reduced time and/or skill requirements compared to conventional dental restoration techniques.

Example tools for a dental restoration are described in commonly-assigned patent applications United States Patent Publ. No. 2018/0021113, titled "Dental Restoration Molding Techniques," filed December 7, 2015, United States Patent Application Serial No. 16/061362, titled "One-Piece Dental Restoration Molds," filed December 15, 2016, United States Patent Application Serial No. 16/061350, titled "Dental Restoration Molds," filed December 15, 2016, WO 2018/022616 Publ. No., titled "Dental Restoration Molds," filed July 25, 2017, and United States Patent Provisional Application Serial No. 62/560457, titled "Dental Restoration Molds," filed September 19, 2017.

The custom molds of the present invention provide critical interproximal restoration of teeth. If the interproximal contacts and spaces between the restored tooth and adjacent teeth are not formed well, the dental patient will end up with either teeth that are bonded together such that dental floss may not pass through, or with teeth that are too far apart that they give the appearance of black triangles in the spaces between the teeth or teeth are spread too far apart. The custom molds also provide a smooth transition of the tooth from supragingival to subgingival. The custom molds incorporate the use of flexible films that assist in forming the interproximal surfaces of the restored tooth, which eliminates the need to use a secondary tool, such as a tweezer, forceps,897, etc., as taught by U.S. Patent Nos. 8,393,897, 9,308,058, and 9,414,895 (Clark). In addition, the custom molds provide other benefits such as providing better control over the positioning of the films taught in Clark, making then easier to use when held in place by the molds. The custom molds may include specially designed midline guides that provide more stable positioning of the films in the proper locations. The custom molds and films also provide closer to final restorations after curing, thus minimizing further shaping or finishing steps by the dentist. Lastly, the surface on the incisal flexure provides a reference for how far to build up the dental restoration material as it approaches the incisal plane.

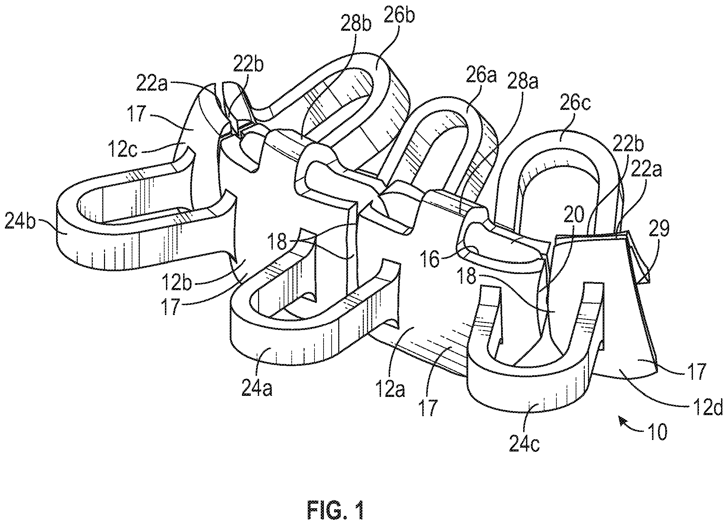

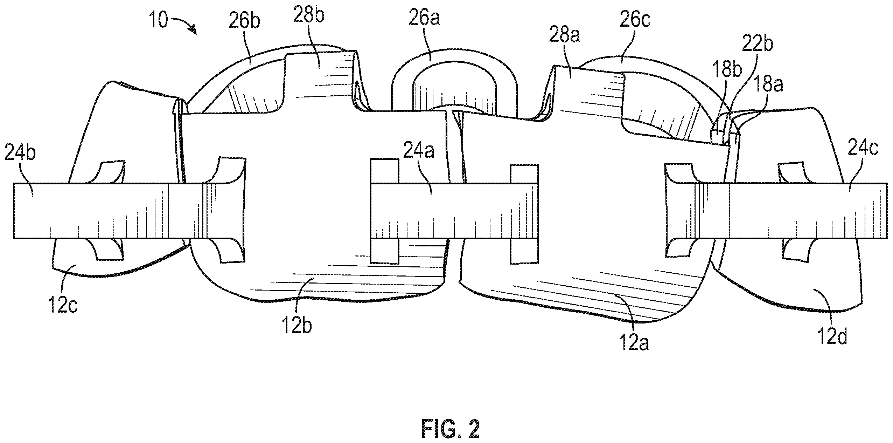

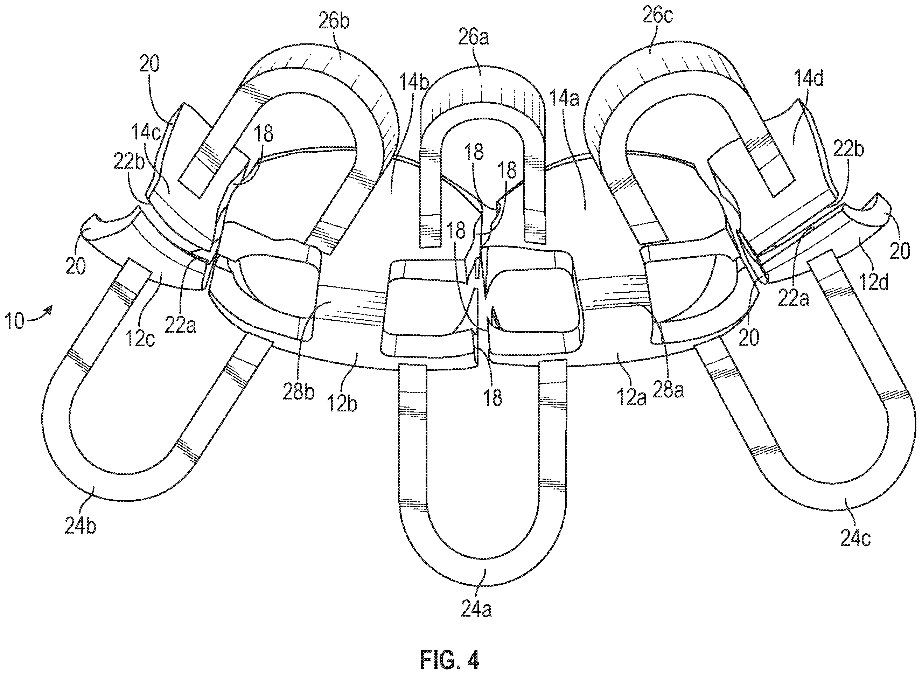

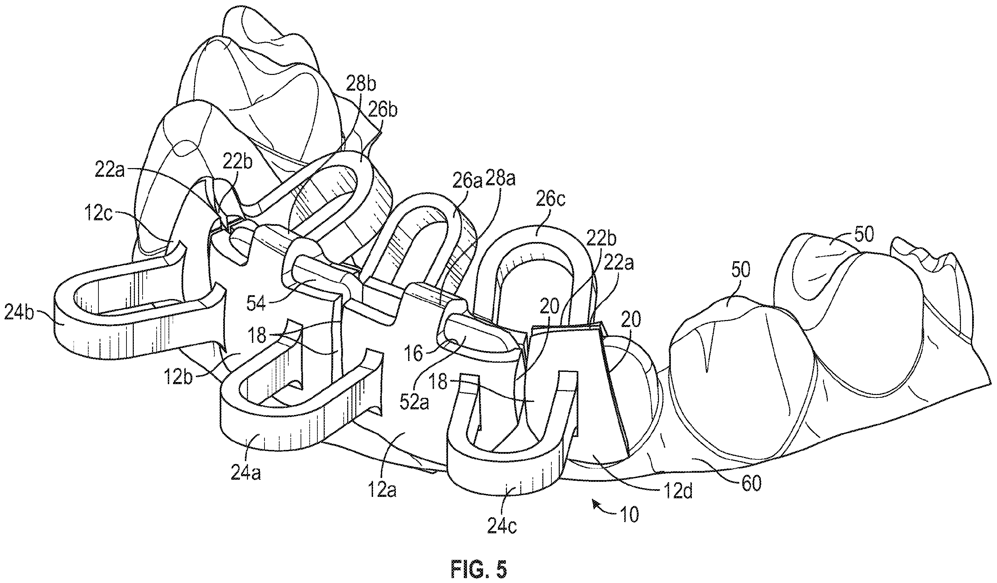

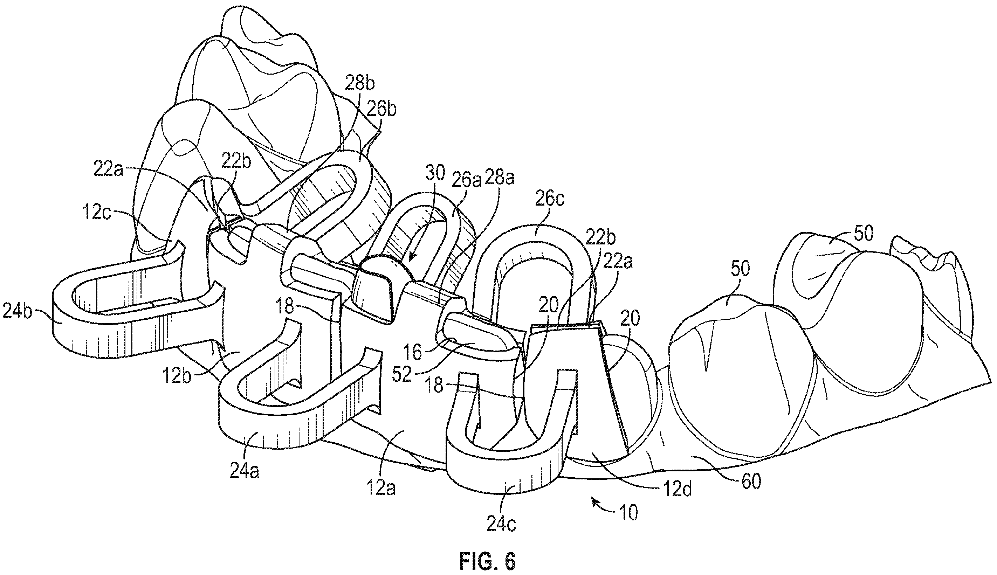

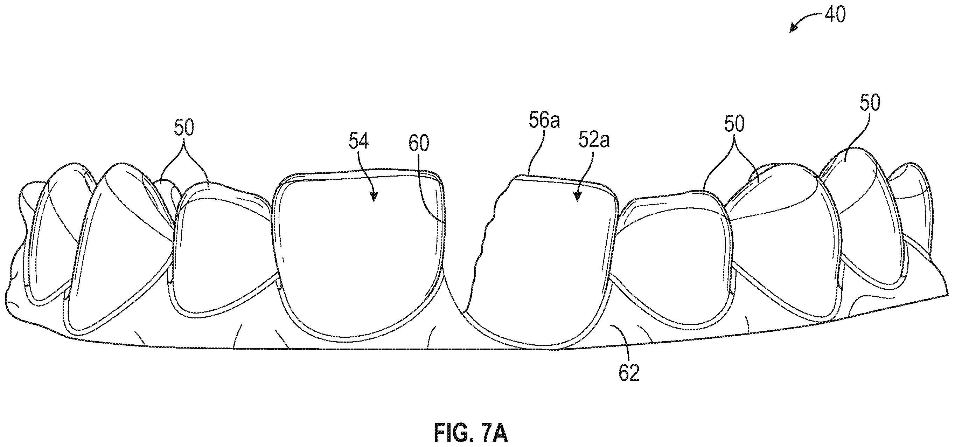

Figures 1, 2, 3 and 4 illustrate an embodiment of a custom tool 10 of the present invention. Figure 5 illustrates the custom tool 10 of the Figures 1-4 within the patient's mouth. Figure 6 illustrates the custom tool 10 of Figures 1-4 and the flexible film 30 within the patient's mouth. Figures 7A-7D illustrate how the custom tool 10 and flexible film 30 are used to form a patient-specific dental restoration.

Figures 1-4 illustrate various views of the two different portions that make up the mold body 10 for forming a patient-specific dental restoration. "Facial" as used herein, including the claims, refers to the direction directed toward the cheeks or lips (i.e., the buccal and labial) of the patient, and opposite the lingual direction. "Lingual" as used herein, including the claims, refers to the direction directed toward the tongue of the patient, and opposite the facial direction. The tool 10 includes a facial mold body portion 12, which may be configured to provide a customized fit with the facial side at least one tooth of a patient. For example, facial mold body 12 may be specifically designed to fit next to, mate with, and provide restorative structure to the at least one tooth. Facial mold body portion 12 may include a first mold portion 12a for engaging with the facial side of a first tooth (not shown), and a second mold portion 12b for engaging with the facial side of a second, adjacent tooth (also not shown). In the example shown in Figure 1, the facial mold body 12 additional mold portions 12c and 12d. There are spaces between the respective mold potion portions 12a, 12b, 12c, and 12d. The custom mold 10 includes flexures for allowing the portions to move relative to one another. For example, a first flexure 24a connects first facial mold portion 12a to second facial mold portion 12b. A second flexure 24b connects the second facial mold portion 12b to a third facial mold portion 12c. The third flexure 24c connects the first mold portion 12a to a fourth mold portion 12d.

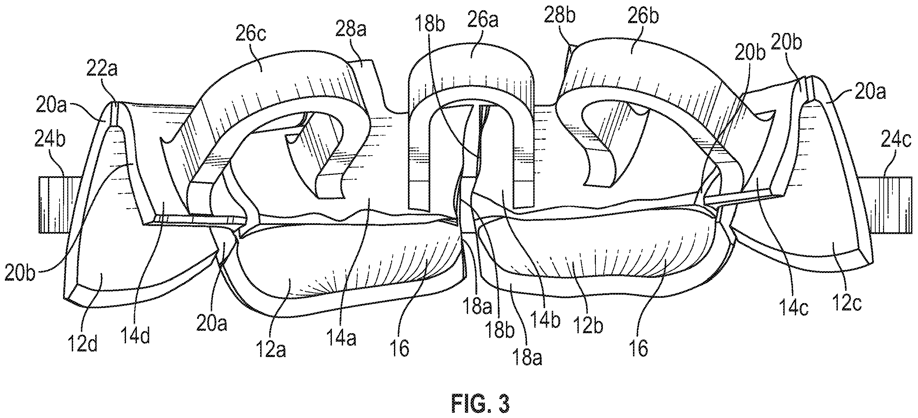

Each facial mold portion 12 has an outer facial surface 17 and an inner facial surface 16 (shown best in Figure 3) located opposite the outer surface 17. Each facial mold portion 12 has a mesial surface 18 and a distal surface 29. The third and fourth facial mold portions 12c, 12d each include an incisal surface 22a.

The tool 10 also includes a lingual mold body portion 14, which may be configured to provide a customized fit with the lingual side at least one tooth of a patient. For example, lingual mold body 14, shown best in Figure 3, may be specifically designed to fit next to, mate with, and provide restorative structure to the at least one tooth. Lingual mold body portion 14 may include a first mold portion 14a for engaging with the lingual side of a first tooth (not shown), and a second mold portion 14b for engaging with the lingual side of a second, adjacent tooth (also not shown). In the example shown in Figure 3, the lingual mold body 14 additional mold portions 14c and 14d. There are spaces between the respective mold potion portions 14a, 14b, 14c, and 14d. The custom mold 10 includes flexures for allowing the portions to move relative to one another. For example, a first flexure 26a connects first lingual mold portion 14a to second lingual mold portion 14b. A second flexure 26b connects the second lingual mold portion 14b to a third lingual mold portion 14c. The third flexure 26c connects the first mold portion 14a to a fourth mold portion 14d.

The facial mold body portions 12 are connected to the lingual mold body portions by an incisal flexure 28. For example, in the illustrated embodiment, incisal flexure 28a connects the first facial mold portion 12a to the first lingual mold portion 14a. Incisal flexure 28b connects the second facial mold portion 12b to the second lingual mold portion 14b. The incisal flexures provide additional flexibility of the custom mold 10 to fit around the patient's teeth. The incisal flexure 28 include an inner surface that aligns with the incisal surface of the tooth to be restored. Specifically, the incisal flexure surface provides a positional reference surface for the incisal surface of either the planned restored tooth and may be used as reference when the dentist is filling up the designed or targeted restoration volume. If the restorative material is filled above the incisal flexure surface, then the restored incisal surface will need to be grinded or filed down accordingly.

The facial mold body portions 12 and lingual mold body portions 14 may be configured to combine with at least two teeth of the patient to define one or mold cavities encompassing at least a portion of desired tooth structure of the tooth or teeth to be restored, with may each being configured to align with a portion of a facial surface and lingual surface of a respective tooth of the patient to be restored. In some examples, the portion is a majority of the surface of the tooth to be restored. The surface of the tooth to be restored and aligned with the respective mold cavities may, for example, be defined by existing tooth structure or by the dental restoration formed using the facial mold body portion 12 and lingual mold body portion 14.

Figure 5 illustrates how the custom mold 10 may be fitted into the patient's mouth. The custom mold 10 slips over the patient's teeth 50. In this case, there is a tooth 52a that needs to be restored. The first facial and lingual mold portions 12a, 14a and first incisal flexure 28a contact the tooth 52a to be restored. The second facial and lingual mold portions 12b, 14b and second incisal flexure 28b contact an adjacent tooth. The fourth facial and lingual mold portions 12d, 14d contact the other adjacent tooth, and only partially engages with the facial and lingual sides of the tooth. One of the benefits of this design is that once assembled, due to the multiple flexures, there is movement between the facial mold body portions 12 and the lingual mold body portion 14 in multiple directions to allow for the flexible film 30 to be inserted into the mold. In addition, it allows for optional wedging between the different portions, allowing for the ability to create better interproximal contacts, where the adjacent teeth are not bonded or fused together. As a result, practitioners are able to create more accurate restorations for their patients.

In the illustrated embodiment, the first facial and lingual mold portions 12a, 14a and first incisal flexure 28a provide the majority of the mold cavity around the tooth to be restored. The second facial and lingual mold portions 12b, 14b and second incisal flexure 28b are formed for registration purposes to the adjacent tooth, that is not to be restored, and to provide a secure fit within the patient's mouth. However, the adjacent tooth may also be optionally restored, if needed.

Figure 6 illustrates how the flexible film 30 is inserted in the custom mold 10 to completely provide the mold cavity. The flexible film provides a convenient surface for forming the interproximal edge from the subgingival to the supragingival. The flexible film is curved and inserted adjacent the first flexure 28a, such that the flexible film contacts both the inner facial surface 16 and the inner lingual surface.

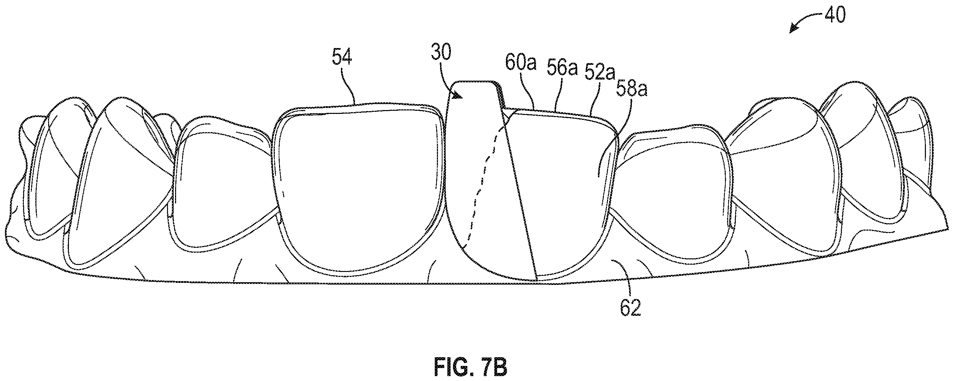

Figures 7A-7D conveniently illustrate the steps of restoring a tooth. Figure 7A illustrates tooth 52a that is to be restored. As illustrated, the patient broke off a portion of the tooth 52a sub gingivally, which extends all the way to the incisal surface 60a. The adjacent tooth 54 was not injured. Figure 7B illustrates the position of the flexible film 30, when it is held into place by the custom tool 10 (not illustrated for clarity). The flexible film, in combination with the custom tool 10 and the remaining tooth 52a, form the cavity for receiving dental restorative material 70. In a preferred embodiment, the film 30 is transparent to allow the dentist to see the level of the dental restorative material 70 within the cavity. In addition, the transparent character of the film allows for light curing of the dental restorative material through the material. The flexible film 30 may be advantageously extended down into the gingiva adjacent the root of the tooth 52a to be restored. The film 30 may extend from a supragingival surface to a subgingival surface of the tooth 52a to be restored. The film 30 may extend between a portion of the gingiva 62 of the patient and the subgingival surface of the tooth to be restored. The film 30 may also displace a portion of the gingiva 62 of the patient proximate to the tooth to be restored. The thickness of the film may be designed to provide an ideal distance between the tooth 52a and adjacent tooth 54, providing a desired interpoximate space between the two teeth. The dentist may optionally place a wedge gingivally and interproximally to the tooth to be restored. Slots are specifically designed for insertion such wedging members.

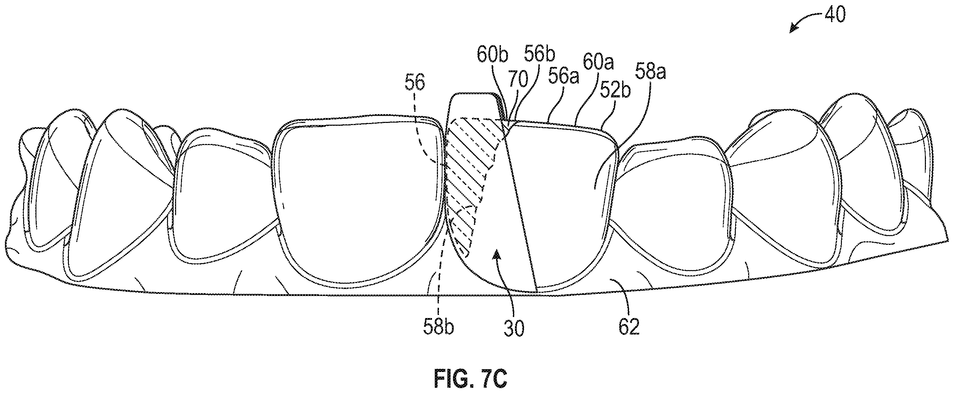

Figure 7C illustrates how the dental restorative material 70 is be inserted into the cavity adjacent the flexible film 30. After the dental restorative material 70 fills up the desired space, it may then be cured by any curing light known in the art. The flexible film provides a smooth surface running from beneath the gingiva 62 up to the incisal surface 60a. With a transparent flexible film 30, a dentist may be able to view the top surface of the dental restorative material 70 relative to the incisal surface 60a of tooth 52a. The practitioner prefers both surfaces parallel to provide one incisal surface 60b of the restored tooth 52b. Transparency of the film 30 and mold 10 allow for light curing through both. Film 30 also allows an oxygen barrier, so you do not end up with an oxygen inhibition layer. The restoration will have a shiny hard surface on the outside instead of a matte, smeary layer on top of the cured composite. The dentist will not have to polish the surface where the composite 70 was in contact with the film 30. The film 30 is also easy to peel off and remove, due to its flexibility. Since the film 30 is flexible, it can adapt to and seal against the root surface sub gingivally to provide a smooth transition with no flash.

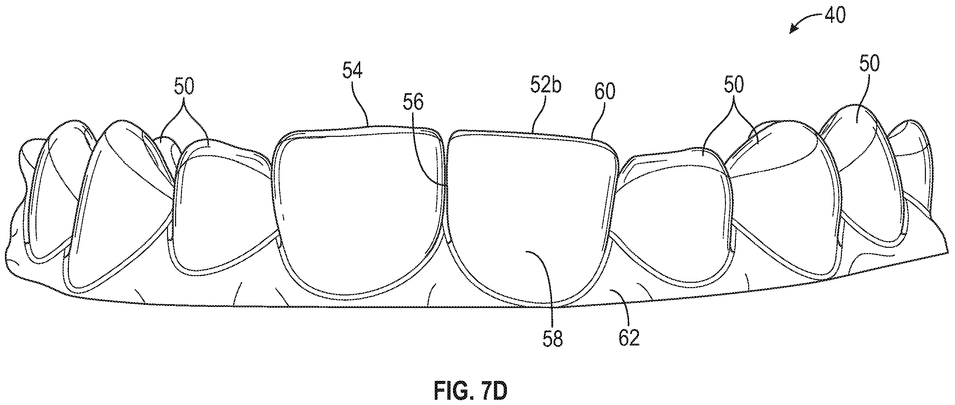

Figure 7D illustrates after the dental restorative material 70 has been cured, and the flexible film 30 and custom mold 10 have been removed from the patient's mouth 40. The restored tooth 52b now has a new facial surface 58, new interproximal surface 56, new lingual surface (not shown), and new incisal surface 60. Facial surface 58a and 58b combine to provide new facial surface 58.

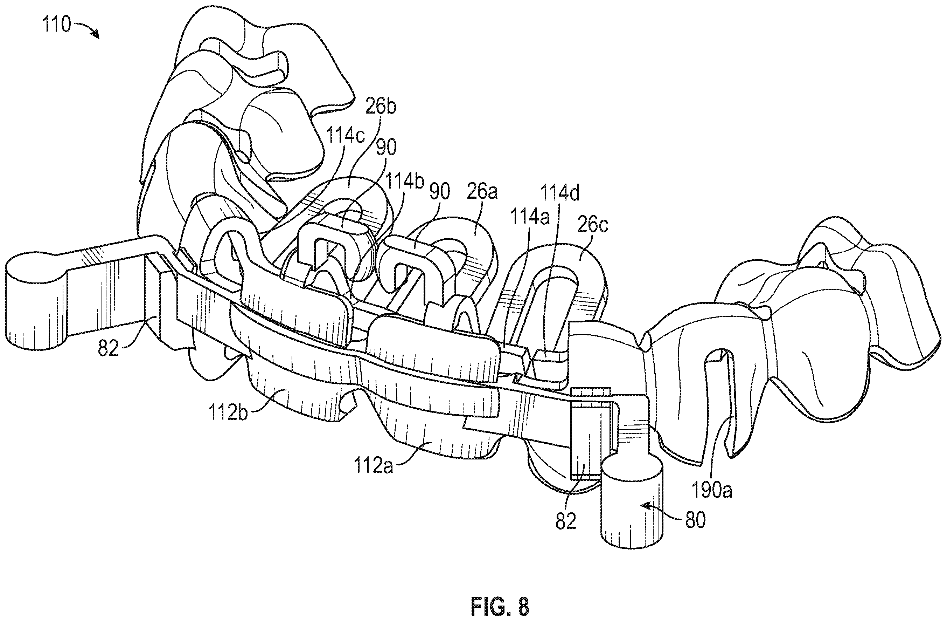

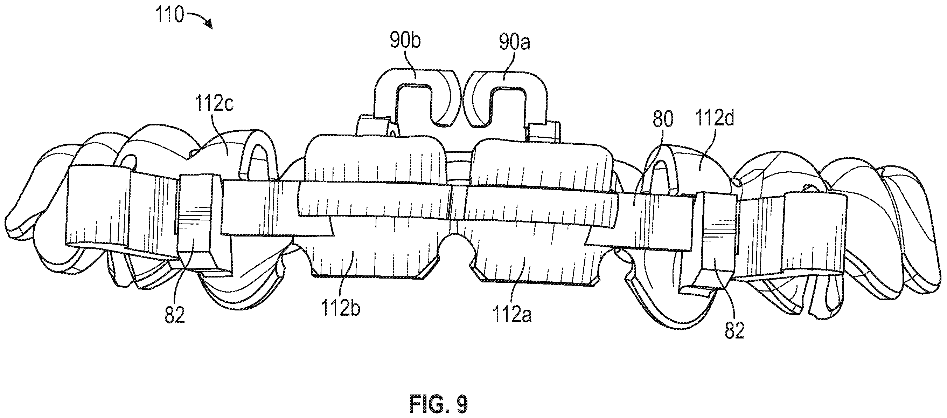

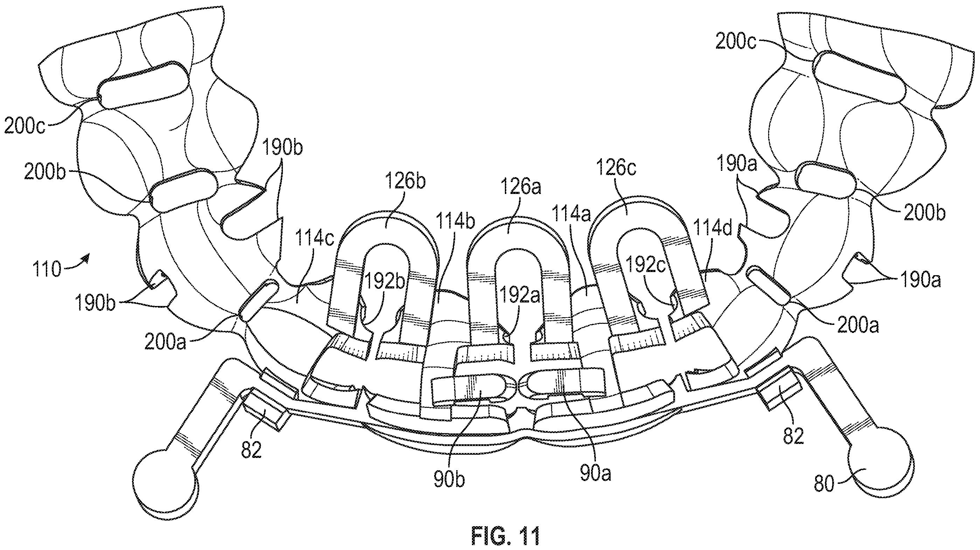

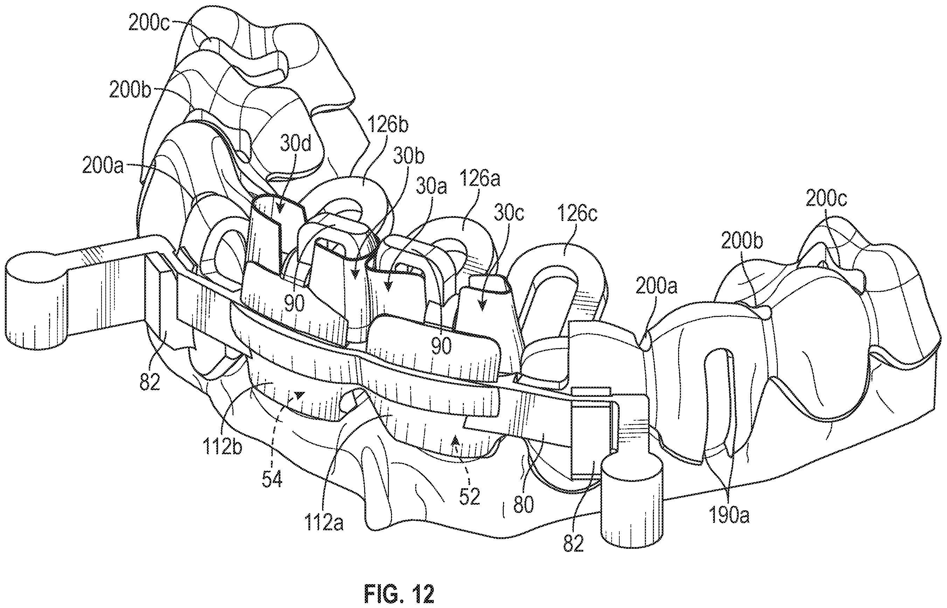

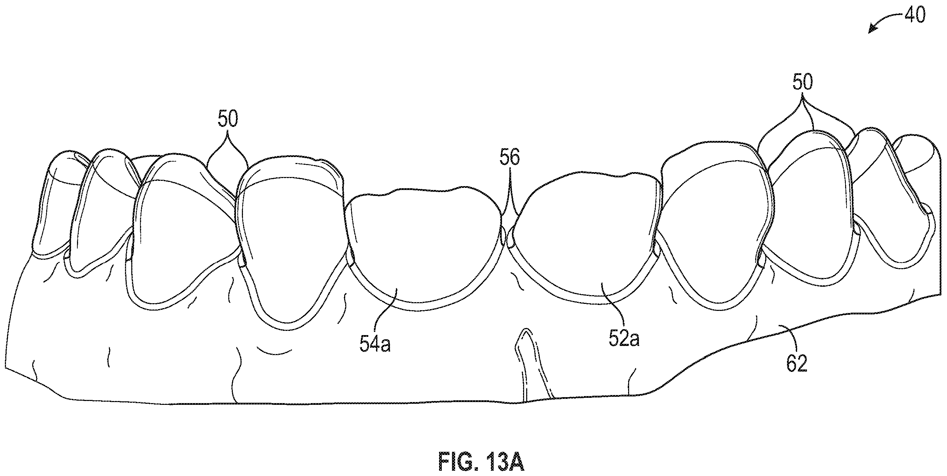

Figures 8, 9, 10, and 11 illustrate another embodiment of a custom tool 110 of the present invention. Custom tool 110 is very similar to custom tool 10 in Figures 1-4, however, custom tool 110 includes additional features such as the midline guides 90 and a stiffing bar 80 which fits into slots 82. Figure 12 illustrates the custom tool 110 of the Figures 8-11 combined with flexible films 30 within the patient's mouth. Figures 13A-13D illustrate how the custom tool 110 and flexible film 30 are used to form a patient-specific dental restoration.

Figures 8-11 illustrate various views of the two different portions that make up the custom mold body 110 for forming a patient-specific dental restoration. The tool 110 includes a facial mold body portion 112, which may be configured to provide a customized fit with the facial side of at least one tooth of a patient. For example, facial mold body 112 may be specifically designed to fit next to, mate with, and provide restorative structure to the at least one tooth. Facial mold body portion 112 may include a first mold portion 112a for engaging with the facial side of a first tooth (not shown), and a second mold portion 12b for engaging with the facial side of a second, adjacent tooth (also not shown). In the example shown in Figure 8, the facial mold body 112 includes additional mold portions 112c and 112d. The custom tool includes a stiffening bar 80, which slips into and out of slots 82 positioned on the third and fourth facial mold bodies 112c, 112d respectively.

There are spaces between the respective mold potion portions 112a, 112b, 112c, and 112d. The spaces are configured to allow the flexible film 30 to be inserted into the mold 10, as shown in Figure 12. In addition, there are slots 200 between adjacent facial and lingual mold portions, positioned between adjacent teeth. Also, there are partial slots 190 located adjacent the base of the teeth, on both the facial and lingual sides. Slots 190, 200 provide additional flexibility of the custom mold 110 to fit around the patient's teeth.

Each facial mold portion 112 has an outer facial surface and an inner facial surface 116 opposite the outer surface 117. The third and fourth facial mold portions 112c, 112d each include an incisal surface 122a.

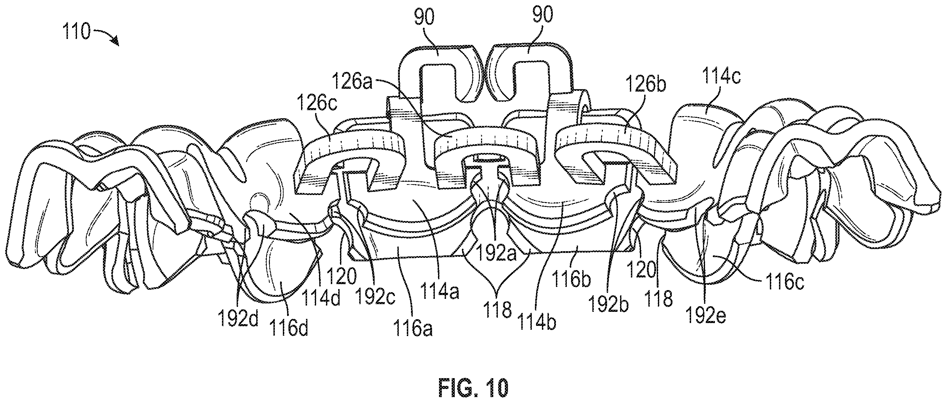

The tool 110 also includes a lingual mold body portion 114, which may be configured to provide a customized fit with the lingual side at least one tooth of a patient. For example, lingual mold body 114, shown best in Figure 10, may be specifically designed to fit next to, mate with, and provide restorative structure to the at least one tooth. Lingual mold body portion 114 may include a first mold portion 114a for engaging with the lingual side of a first tooth (not shown), and a second mold portion 114b for engaging with the lingual side of a second, adjacent tooth (also not shown). In the example shown in Figure 10, the lingual mold body 114 additional mold portions 114c and 114d. There are spaces between the respective mold potion portions 114a, 114b, 114c, and 114d. The custom mold 10 includes flexures for allowing the portions to move relative to one another. For example, a first flexure 126a connects first lingual mold portion 114a to second lingual mold portion 114b. A second flexure 126b connects the second lingual mold portion 114b to a third lingual mold portion 114c. The third flexure 126c connects the first mold portion 114a to a fourth mold portion 114d.

The facial mold body portions 112 may be connected to the lingual mold body portions by an incisal flexure 128. For example, in the illustrated embodiment, incisal flexure 128a connects the first facial mold portion 112a to the first lingual mold portion 114a. Incisal flexure 128b connects the second facial mold portion 12b to the second lingual mold portion 114b. The incisal flexures provide additional flexibility of the custom mold 110 to fit around the patient's teeth.

The facial mold body portions 112 and lingual mold body portions 114 may be configured to combine with at least two teeth of the patient to define one or mold cavities encompassing at least a portion of desired tooth structure of the tooth or teeth to be restored, which may each being configured to align with a portion of a facial surface and lingual surface of a respective tooth of the patient to be restored. In some examples, the portion is a majority of the surface of the tooth to be restored. The surface of the tooth to be restored and aligned with the respective mold cavities may, for example, be defined by existing tooth structure or by the dental restoration formed using the facial mold body portion 112 and lingual mold body portion 114.

Custom mold 110 includes at least one midline guide 90 for assisting the dentist in placing the flexible film 30 in the correct location within the custom mold 10. In the illustrated embodiment, the custom mold 110 includes two midline guides 90a, 90b where each is connected to the incisal flexure 128. The ends of the midline guide 90 are curved to help pinch the two flexible films 30 together, as illustrated in Figure 12.

Custom mold 110 also includes a stiffening bar 80 for useful for holding the facial mold portions in place within the patient's mouth. Once the lingual portions and the posterior teeth portions of the custom mold is positioned in its proper place, the facial portions 112 may be positioned by sliding the stiffening bar into the slots 82. This configuration makes it easier for the dentist to later remove the two portions from the patient's mouth, after the restoration is complete. This configuration also allows for access and for varying techniques of composite and adhesive placement. Before stiffening bar 80 is placed, the doctor has a lot of access to the facial side of the films and can move them around to place adhesive inside and then composite inside. Then, they can slide 80 into 82 to form the composite to the facial surface of 80 before curing.

Figure 12 illustrates how the custom mold 110 may be fitted into the patient's mouth. The custom mold 110 slips over the patient's teeth 50. In this case, there is a tooth 52a and a tooth 54a that both need to be restored. The first facial and lingual mold portions 112a, 114a and first incisal flexure 128a contact the tooth 52a to be restored. The second facial and lingual mold portions 112b, 114b and second incisal flexure 128b contact an adjacent second tooth 54a. The fourth facial and lingual mold portions 112d, 114d contact another adjacent tooth, and only partially engages with the facial and lingual sides of the tooth. The third facial and lingual mold portions 112c, 114c contact another adjacent tooth and only partially engages with the facial and lingual sides of the tooth. The remaining portions of the custom tool 110 are positioned over the posterior teeth. One of the benefits of this design is that once assembled, due to the multiple flexures, there is movement between the facial mold body portions 112 and the lingual mold body portion 114 in multiple directions to allow for the flexible film 30 to be inserted into the mold. This configuration also allows for wedging. This is important when using two films to close a diastema. If you do not wedge, you will end up with a gap between the teeth that is the thickness of two films wide. The wedge is used to compensate for this thickness. Once the wedge is removed, the two teeth will come back together in contact. As a result, practitioners are able to create more accurate restorations for their patients.

In the illustrated embodiment, the first facial and lingual mold portions 112a, 114a and first incisal flexure 128 provide the majority of the mold cavity around the tooth to be restored 52a. The second facial and lingual mold portions 112b, 114b and second incisal flexure 128b provide the majority of the mold cavity around the tooth to be restored 54a.

Figure 12 illustrates how the flexible films 30 are inserted in the custom mold 110 to completely provide the mold cavity. Optionally, films may be placed before or after the mold 110 is seated within the patient's mouth. As discussed above, the flexible films provide a convenient surface for forming the interproximal edge of the restoration and, in some embodiments, from the subgingival to the supragingival. The flexible film 30 is curved and inserted adjacent the first flexure 128a, such that the flexible film contacts both the inner facial surface 116 and the inner lingual surface. The midline guide 90 is used to position the curve of the flexible film in the right spot for locating the incisal surface of the tooth restoration of tooth 52a. Likewise, another flexible film 30 is inserted adjacent the other midline guide 90 to locate the incisal surface of the tooth restoration of tooth 54a. Additional films 30 are inserted into the custom tool 110 to form the opposite surfaces in the inner proximal spaces.

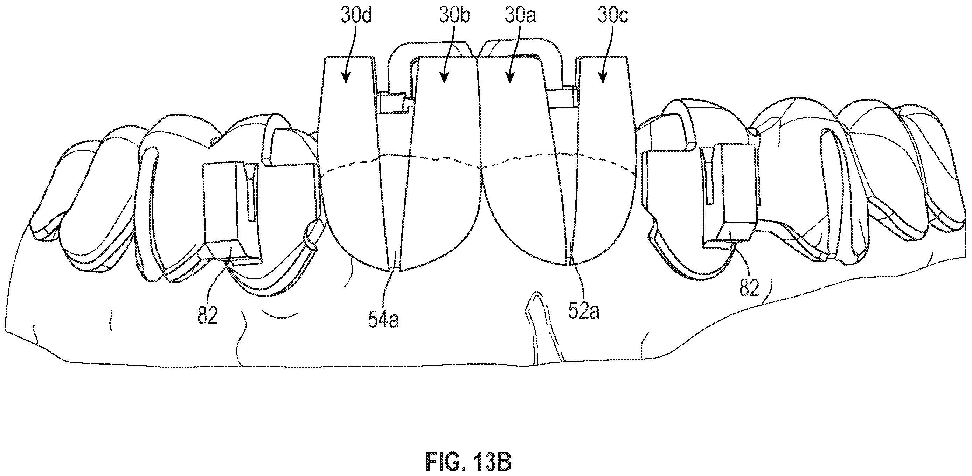

Figures 13A-13D conveniently illustrate the steps of restoring a tooth. Figure 13A illustrates tooth 52a and tooth 54a that are to be restored. As illustrated, the patient broke off a portion of the tooth 52a and tooth 54a sub gingivally, which extends all the incisal surfaces. Figure 13B illustrates the position of the flexible film 30, when it is held into place by the custom tool 110. The flexible films 30, in combination with the custom tool 110 and the remaining teeth 52a, 54a form the cavity for receiving dental restorative material 70. The stiffening bar 80 and the facial mold body portions 112 have been removed to show more clearly the restoration steps. In a preferred embodiment, the films 30 are transparent to allow the dentist to see the level of the dental restorative material 70 within the cavity. The flexible films 30 may be advantageously extended down into the gingiva adjacent the root of the teeth 52a, 54a to be restored. The film 30 may extend from a supragingival surface to a subgingival surface of the tooth to be restored. The film 30 may extend between a portion of the gingiva 62 of the patient and the subgingival surface of the tooth to be restored. The film 30 may also displace a portion of the gingiva 62 of the patient proximate to the tooth to be restored. The thickness of the film may be designed to provide an ideal distance between the tooth 52a and adjacent tooth 54a, providing a desired interproximate space between the two teeth. The dentist may optionally place a wedge gingivally and interproximally to the tooth to be restored using slots 192.

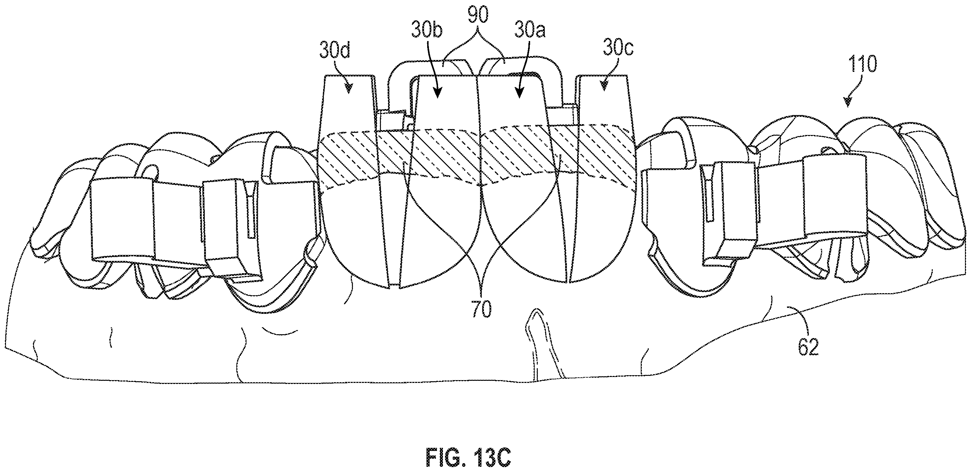

Figure 13C illustrates how the dental restorative material 70 may be inserted into the cavity adjacent the flexible film 30. After the dental restorative material 70 fills up the desired space, it may then be cured by any curing light known in the art. The flexible film provides a smooth surface running from beneath the gingiva 62 up to the incisal surface 160. With a transparent flexible film 30, a dentist may be able to view the top surface of the dental restorative material 70 relative to the incisal surface of the tool 110. The practitioner prefers both surfaces parallel to provide one incisal surface of the restored tooth 52b.

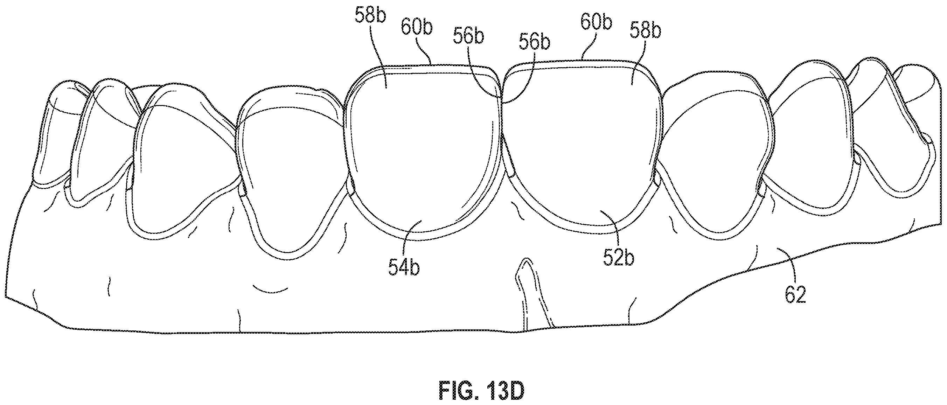

Figure 13D illustrates after the dental restorative material 70 has been cured, and the flexible film 30 and custom mold 110 have been removed from the patient's mouth 40. The restored teeth 52b, 54b now have a new facial surface 58, new interproximal surface 56, new lingual surface (not shown), and new incisal surface 60.

Although not shown, facial mold body portions 12, 112 and lingual mold body portions14, 114 may be configured to mate with one another and/or to be attached to the at least one tooth to form the mold cavity. In some examples, lingual mold body 14, 114 may be separable from and engageable with the facial mold body 12, 112 while maintaining the integrity of the respective mold bodies, through use of their engagement portions.

Custom tools can be made from the full range of 3D printed materials, molded polymeric material or CAD/CAM shaped polymeric materials having certain desired strength, flexibility, translucency, or color. For example, the mold material can be polymeric material that may be transparent, translucent, or opaque. In some embodiments, clear or substantially transparent polymeric material that may include, for example, one or more of amorphous thermoplastic polymers, semi-crystalline thermoplastic polymers, transparent thermoplastic polymers, and thermoset polymers. Thermoplastics can be chosen from polycarbonate, thermoplastic polyurethane, acrylic, polysulfone, polyprolylene, polypropylene/ethylene copolymer, cyclic olefin polymer/copolymer, poly-4-methyl-1-pentene or polyester/polycarbonate copolymer, styrenic polymeric materials, polyamide, polymethylpentene, polyetheretherketone and combinations thereof. In another embodiment, the mold may be chosen from clear or substantially transparent semi-crystalline thermoplastic, crystalline thermoplastics and composites, such as polyamide, polyethylene terephthalate. polybutylene terephthalate, polyester/polycarbonate copolymer, polyolefin, cyclic olefin polymer, styrenic copolymer, polyetherimide, polyetheretherketone, polyethersulfone, polytrimethylene terephthalate, and mixtures and combinations thereof. In some embodiments, the mold is a polymeric material chosen from polyethylene terephthalate, polyethylene terephthalate glycol, poly cyclohexylenedimethylene terephthalate glycol, and mixtures and combinations thereof. In additional embodiments thermoset polymers include acrylics, urethanes, esters, silicones, thiolenes, epoxies, olefin metathesis and combinations thereof.

The degree of flexibility between the facial mold body portions 12, 112 and the lingual mold body portions 14, 114 should be tailored to balance the security of the installed tool 10, 110 around the patient's teeth, ease of installation into and removal from the patient's mouth, and holding the flexible films in place while the restoration is completed. The stiffness of the mold bodies 12, 14, 112, 114 can be increased by selection of materials, geometry the amount of shortening of the facial mold body portions 12, 112, lingual mold body portions 14, 114, and and/or reduction of the radius of curvatures of the mold body portions. Modifications to the mold body portions 12, 14, 112, 114 can be applied across the mold body portions, for instance by applying an appropriate shrinkage factor, or they can be applied locally to various regions of the mold bodies. Tools such as finite element modeling can be used to predict the appropriate parameters for a given custom tool based on test results of previously tested cases. Machine learning can be applied to improve prediction capability over time, including feedback on clinical performance from practitioners. Digital design and manufacturing, such as 3D printing or CNC machining, is particularly helpful in creating custom tool molds

One preferable dental restorative material is sold under the brand Filtek ^{™} Supreme Universal^{™}, commercially available from 3M Company based in St. Paul, Minnesota. For example, if the restorative material is light curable, the practitioner may expose the restorative material to the curing light (e.g., a blue light) through one or both of the mold body portions 12, 14, and flexible film 30, which may all be formed of a material transparent to the curing light. After removal of the mold bodies 12, 14, and flexible film 30 from the teeth, in some examples, the practitioner may finish the teeth, which now include restored dental structure defined by the restorative material, such as by polishing, to remove flash or other undesired surface imperfections.

In the illustrated embodiment, the custom tool 10, 110 is sized and shaped to be mate with the anterior teeth of a patient. However, in other embodiments (not illustrated), the custom tool 10, 110 could be adjacent the posterior teeth.

Custom tools as described herein may be formed based on a digital model of the teeth and mouth of an individual patient, which can be produced from an intra-oral 3D scan, such as an intraoral scanner. In one particular example, the custom tools may be digitally designed using CAD software, such as solid modeling software based on the digital model of the planned restored dentition. Custom tool was designed to fit over the tooth or teeth to be restored teeth (and a portion of the neighboring teeth. Subsequently, the tooth structure model of the restored teeth may be digitally subtracted from a mold block to create a tool. Alternatively, an inverse of the tooth structure may be inverted within software to define the mold block.

In some examples, the flexible film may reduce the likelihood of trapping air within the mold cavity during stamping of the restorative material 70 within the cavity and/or may facilitate release of restorative material 70 from custom tool 10.

The flexible film 30 is a preferably a polymeric material. For example, suitable polymeric materials include polycarbonate, polyvinyl chloride, polyester, polyurethane, acrylic, polysulfone, polypropylene, polypropylene/ethylene copolymer, cyclic olefin polymer/copolymer, poly-4-methyl-1-pentene or polyester/polycarbonate copolymer, styrenic polymeric materials, polyamide, polymethylpentene, polyetheretherketone, and combinations thereof. Alternatively, the flexible film is a may be a metal foil material, such as aluminum, stainless steel, titanium or combinations thereof.

The flexible film is preferably transparent or translucent. Also, the flexible film may have a cross-sectional thickness between 25-300 microns. As discussed above, the thickness of the film approximates the resulting distance of the interproximal space between the restored tooth and adjacent tooth. When the facial portions of the mold body and the lingual portions of the mold body are made to correspond with portions of the patient's existing tooth structure prior to restoration to provide the patient-specific, customized fit based on three-dimensional scan data from a digital 3D representation or model of the patient's intraoral structure, the average thickness of the flexible film should be taken into account. This means that the custom mold 10, 110 will includes the shape of the patient's teeth subtracting out the thickness of the flexible film 30 in the areas where it is expected that the dentist will use the film 30 to form the dental restoration.

Lastly, a kit for forming a dental restoration within the mouth of a patient may include the custom tool of the present invention, and an amount of dental restorative material expected to be used for making the restoration. The color of the restorative material could also be preselected for the patient.

## Claims

1. A dental restoration custom tool (10), comprising:
a mold body for a patient-specific, customized fit with the facial side and the lingual side of at least two adjacent teeth of the patient, wherein the mold body comprises:
a first facial mold portion (12a) for a patient-specific, customized fit with the facial side of a first tooth of the patient;
a second facial mold portion (12b) for a patient-specific, customized fit with the facial side of a second tooth of the patient adjacent the first tooth;
a first lingual mold portion (14a) for a patient-specific, customized fit with the lingual side of the first tooth of the patient;
a second lingual mold portion (14b) for a patient-specific, customized fit with the lingual side of the second tooth of the patient; and
a first incisal flexure (28a) connecting the first facial mold portion (12a) to the first lingual mold portion (14a), the first incisal flexure (28a) including a flexure surface configured to contact the incisal surface (60a) of at least one tooth (52a) to be restored, the flexure surface providing a positional reference surface for the incisal surface (60a) of either the planned restored tooth or the unrestored tooth; and
a flexible film (30) inserted into the mold body to combine with the mold body to form a mold cavity encompassing missing tooth structure of the at least one tooth (52a) to be restored.

2. The custom tool of claim 1, further including a first midline guide (90), wherein the flexible film (30) is in contact with the first midline guide.

3. The custom tool of claim 1, wherein the film (30) is configured in the mold body to extend from a supragingival surface to a subgingival surface of the tooth to be restored.

4. The custom tool of claim 3, wherein the film (30) is configured in the mold body to extend between a portion of the gingiva (62) of the patient and the subgingival surface of the tooth to be restored.

5. The custom tool of claim **1,** wherein the film (30) is positioned in an interproximal portion of the mold cavity.

6. The custom tool of claim **1,** wherein the flexible film (30) is transparent or translucent.

7. The custom of tool of claim **1,** wherein the mold body is configured to combine with a second flexible film to form a second mold cavity encompassing a second missing tooth structure of the tooth to be restored, and wherein custom tool further includes a second flexible film inserted into the mold body to combine with the custom tool to form the second mold cavity.

8. The custom tool of claim **1,** further including a second incisal flexure (28b) connecting the second facial mold portion (12b) to the second lingual mold portion (14b).

9. The custom tool of claim **1,** wherein the facial mold body portions and the lingual mold body surfaces together form inner surfaces corresponding to the tooth's outer surface prior to restoration.

10. The custom tool of claim **1,** further comprising a dental restorative material (70) located within the mold cavity, and a tooth receiving the restoration in the patient's mouth.

11. A kit for forming a dental restoration within the mouth of a patient comprising:
the custom tool of claim **1,** and dental restorative material (70).

12. A method of designing a custom tool (10) for forming a dental restoration of a tooth, the method comprising:
receiving, by one or more processors, three-dimensional scan data of a supragingival tooth structure of a patient;
designing, by the one or more processors, a custom tool for forming the dental restoration of the tooth based on the three-dimensional scan data of the supragingival and subgingival tooth structure of the patient, and the desired tooth structure of the at least one tooth to be restored of the patient, wherein the tool comprises:
a mold body for a patient-specific, customized fit with the facial side and the lingual side of at least two adjacent teeth of the patient, wherein the mold body comprises:
a first facial mold portion (12a) for a patient-specific, customized fit with the facial side of a first tooth of the patient;
a second facial mold portion (12b) for a patient-specific, customized fit with the facial side of a second tooth of the patient adjacent the first tooth;
a first lingual mold portion (14a) for a patient-specific, customized fit with the lingual side of the first tooth of the patient;
a second lingual mold portion (14b) for a patient-specific, customized fit with the lingual side of the second tooth of the patient; and
a first incisal flexure (28a) connecting the first facial mold portion (12a) to the first lingual mold portion (14a), the first incisal flexure (28a) including a flexure surface configured to contact the incisal surface (60a) of at least one tooth (52a) to be , the flexure surface provides a positional reference surface for the incisal surface (60a) of either the planned restored tooth or the unrestored tooth; wherein the designing step includes configuring the mold body to combine with a flexible film (30) to form a mold cavity encompassing missing tooth structure of the at least one tooth (52a) to be restored.

13. The method of claim 12, wherein the at least two adjacent teeth of the patient include tooth structure that exists prior to the restoration, wherein the first and second facial mold portions (12a, 12b) of the mold body and the first and second lingual mold portions (14a, 14b) of the mold body correspond with portions of the tooth structure of the patient that exist prior to restoration, and wherein the correspondence takes into account an average thickness of the flexible film (30).

## Patentansprüche

1. Ein maßgefertigtes Werkzeug (10) zur Zahnrestauration, aufweisend:
einen Formkörper für eine patientenspezifische, individuelle Passung an die Gesichtsseite und die Lingualseite von mindestens zwei benachbarten Zähnen des Patienten, wobei der Formkörper aufweist:
einen ersten Gesichtsformabschnitt (12a) für eine patientenspezifische, individuelle Passung an die Gesichtsseite eines ersten Zahns des Patienten;
einen zweiten Gesichtsformabschnitt (12b) für eine patientenspezifische, individuelle Passung an die Gesichtsseite eines zweiten Zahns des Patienten neben dem ersten Zahn;
einen ersten Lingualformabschnitt (14a) für eine patientenspezifische, individuelle Passung an die Lingualseite des ersten Zahns des Patienten;
einen zweiten Lingualformabschnitt (14b) für eine patientenspezifische, individuelle Passung an die Lingualseite des zweiten Zahns des Patienten; und
eine erste inzisale Biegung (28a), die den ersten Gesichtsformabschnitt (12a) mit dem ersten Lingualformabschnitt (14a) verbindet, wobei die erste inzisale Biegung (28a) eine Bieaungsfläche aufweist, die so konfiguriert ist, dass sie mit der Inzisalfläche (60a) von mindestens einem zu restaurierenden Zahn (52a) in Kontakt kommt, wobei die Biegungsfläche eine Positionsreferenzfläche für die Inzisalfläche (60a) entweder des geplanten restaurierten Zahns oder des nicht restaurierten Zahns bereitstellt; und
einen flexiblen Film (30), der in den Formkörper eingesetzt ist, um sich mit dem Formkörper zu verbinden, um einen Formhohlraum zu bilden, der eine fehlende Zahnstruktur des mindestens einen zu restaurierenden Zahns (52a) umschließt.

2. Das maßgefertigte Werkzeug nach Anspruch 1, das ferner eine erste Mittellinienführung (90) aufweist, wobei der flexible Film (30) mit der ersten Mittellinienführung in Kontakt ist.

3. Das maßgefertigte Werkzeug nach Anspruch 1, wobei der Film (30) in dem Formkörper so konfiguriert ist, dass er sich von einer supragingivalen Oberfläche zu einer subgingivalen Oberfläche des zu restaurierenden Zahns erstreckt.

4. Das maßgefertigte Werkzeug nach Anspruch 3, wobei der Film (30) in dem Formkörper so konfiguriert ist, dass er sich zwischen einem Teil der Gingiva (62) des Patienten und der subgingivalen Oberfläche des zu restaurierenden Zahns erstreckt.

5. Das maßgefertigte Werkzeug nach Anspruch 1, wobei der Film (30) in einem interproximalen Abschnitt des Formhohlraums positioniert ist.

6. Das maßgefertigte Werkzeug nach Anspruch 1, wobei der flexible Film (30) transparent oder transluzent ist.

7. Das maßgefertigte Werkzeug nach Anspruch 1, wobei der Formkörper so konfiguriert ist, dass er sich mit einem zweiten flexiblen Film verbindet, um einen zweiten Formhohlraum zu bilden, der eine zweite fehlende Zahnstruktur des zu restaurierenden Zahns umschließt, und wobei das maßgefertigte Werkzeug ferner einen zweiten flexiblen Film aufweist, der in den Formkörper eingesetzt ist, um sich mit dem maßgefertigten Werkzeug zu verbinden, um den zweiten Formhohlraum zu bilden.

8. Das maßgefertigte Werkzeug nach Anspruch 1, das ferner eine zweite inzisale Biegung (28b) aufweist, die den zweiten Gesichtsformabschnitt (12b) mit dem zweiten Lingualformabschnitt (14b) verbindet.

9. Das maßgefertigte Werkzeug nach Anspruch 1, wobei die Gesichtsformkörperabschnitte und die Lingualformkörperflächen zusammen Innenflächen bilden, die der Außenfläche des Zahns vor der Restauration entsprechen.

10. Das maßgefertigte Werkzeug nach Anspruch 1, das ferner ein Zahnrestaurationsmaterial (70), das sich in dem Formhohlraum befindet, und einen Zahn aufweist, der die Restauration im Mund des Patienten aufnimmt.

11. Ein Kit zum Ausbilden einer Zahnrestauration im Mund eines Patienten, aufweisend:
das maßgefertigte Werkzeug nach Anspruch 1 und Zahnrestaurationsmaterial (70).

12. Ein Verfahren zum Entwerfen eines maßgefertigten Werkzeugs (10) zum Ausbilden einer dentalen Restauration eines Zahns, wobei das Verfahren aufweist:
Empfangen, durch einen oder mehrere Prozessoren, von dreidimensionalen Scandaten einer supragingivalen Zahnstruktur eines Patienten;
Entwerfen, durch den einen oder die mehreren Prozessoren, eines maßgefertigten Werkzeugs zum Ausbilden der dentalen Restauration des Zahns basierend auf den dreidimensionalen Scandaten der supragingivalen und subgingivalen Zahnstruktur des Patienten und der gewünschten Zahnstruktur des mindestens einen zu restaurierenden Zahns des Patienten, wobei das maßgefertigte Werkzeug aufweist:
einen Formkörper für eine patientenspezifische, individuelle Passung an die Gesichtsseite und die Lingualseite von mindestens zwei benachbarten Zähnen des Patienten, wobei der Formkörper aufweist:
einen ersten Gesichtsformabschnitt (12a) für eine patientenspezifische, individuelle Passung an die Gesichtsseite eines ersten Zahns des Patienten;
einen zweiten Gesichtsformabschnitt (12b) für eine patientenspezifische, individuelle Passung an die Gesichtsseite eines zweiten Zahns des Patienten neben dem ersten Zahn;
einen ersten Lingualformabschnitt (14a) für eine patientenspezifische, individuelle Passung an die Lingualseite des ersten Zahns des Patienten;
einen zweiten Lingualformabschnitt (14b) für eine patientenspezifische, individuelle Passung an die Lingualseite eines zweiten Zahns des Patienten; und
eine erste inzisale Biegung (28a), die den ersten Gesichtsformabschnitt (12a) mit dem ersten Lingualformabschnitt (14a) verbindet, wobei die erste inzisale Biegung (28a) eine Biegungsfläche aufweist, die so konfiguriert ist, dass sie mit der Inzisalfläche (60a) von mindestens einem zu Zahn (52a) in Kontakt kommt, wobei die Biegungsfläche eine Positionsreferenzfläche für die Inzisalfläche (60a) entweder des geplanten restaurierten Zahns oder des nicht restaurierten Zahns bereitstellt; wobei der Entwurfsschritt ein Konfigurieren des Formkörpers zum Kombinieren mit einem flexiblen Film (30) aufweist, um einen Formhohlraum zu bilden, der eine fehlende Zahnstruktur des mindestens einen zu restaurierenden Zahns (52a) umschließt.

13. Verfahren nach Anspruch 12, wobei die mindestens zwei benachbarten Zähne des Patienten eine Zahnstruktur aufweisen, die vor der Restauration vorhanden war, wobei der erste und zweite Gesichtsformabschnitt (12a, 12b) des Formkörpers und der erste und zweite Lingualformabschnitt (14a, 14b) des Formkörpers mit Abschnitten der Zahnstruktur des Patienten übereinstimmen, die vor der Wiederherstellung vorhanden waren, und wobei die Übereinstimmung eine durchschnittliche Dicke des flexiblen Films (30) berücksichtigt.

## Revendications

1. Outil de personnalisation de restauration dentaire (10), comprenant :
un corps de moule pour un ajustement personnalisé spécifique au patient avec le côté facial et le côté lingual d'au moins deux dents adjacentes du patient, dans lequel le corps de moule comprend :
une première partie de moule facial (12a) pour un ajustement personnalisé spécifique au patient avec le côté facial d'une première dent du patient ;
une seconde partie de moule facial (12b) pour un ajustement personnalisé spécifique au patient avec le côté facial d'une seconde dent du patient adjacente à la première dent ;
une première partie de moule lingual (14a) pour un ajustement personnalisé spécifique au patient avec le côté lingual de la première dent du patient ;
une seconde partie de moule lingual (14b) pour un ajustement personnalisé spécifique au patient avec le côté lingual de la seconde dent du patient ; et
une première flexion incisive (28a) reliant la première partie de moule facial (12a) à la première partie de moule lingual (14a), la première flexion incisive (28a) comportant une surface de flexion conçue pour entrer en contact avec la surface incisive (60a) d'au moins une dent (52a) à restaurer, la surface de flexion fournissant une surface de référence positionnelle pour la surface incisive (60a) soit de la dent restaurée prévue soit de la dent non restaurée ; et
un film souple (30) inséré dans le corps du moule pour se combiner avec le corps du moule afin de former une cavité de moule englobant la structure de dent manquante de l'au moins une dent (52a) à restaurer.

2. Outil de personnalisation selon la revendication 1, comportant en outre un premier guide de ligne médiane (90), dans lequel le film souple (30) est en contact avec le premier guide de ligne médiane.

3. Outil de personnalisation selon la revendication 1, dans lequel le film (30) est conçu dans le corps de moule pour s'étendre à partir d'une surface supra-gingivale jusqu'à une surface sous-gingivale de la dent à restaurer.

4. Outil de personnalisation selon la revendication 3, dans lequel le film (30) est conçu dans le corps de moule pour s'étendre entre une partie de la gencive (62) du patient et la surface sous-gingivale de la dent à restaurer.

5. Outil de personnalisation selon la revendication 1, dans lequel le film (30) est positionné dans une partie interproximale de la cavité de moule.

6. Outil de personnalisation selon la revendication 1, dans lequel le film souple (30) est transparent ou translucide.

7. Outil de personnalisation selon la revendication 1, dans lequel le corps de moule est conçu pour se combiner avec un second film souple afin de former une seconde cavité de moule englobant une seconde structure de dent manquante de la dent à restaurer, et dans lequel l'outil de personnalisation comporte en outre un second film souple inséré dans le corps de moule pour se combiner avec l'outil de personnalisation afin de former la seconde cavité de moule.

8. Outil de personnalisation selon la revendication 1, comportant en outre une seconde flexion incisive (28b) reliant la seconde partie de moule facial (12b) à la seconde partie de moule lingual (14b).

9. Outil de personnalisation selon la revendication 1, dans lequel les parties de corps de moule facial et les surfaces de corps de moule lingual forment ensemble des surfaces internes correspondant à la surface externe de la dent avant la restauration.

10. Outil de personnalisation selon la revendication 1, comprenant en outre un matériau de restauration dentaire (70) situé au sein de la cavité de moule, et une dent recevant la restauration dans la bouche du patient.

11. Kit destiné à former une restauration dentaire au sein de la bouche d'un patient comprenant :
l'outil de personnalisation selon la revendication 1, et le matériau de restauration dentaire (70).

12. Procédé d'élaboration d'un outil de personnalisation (10) destiné à former une restauration dentaire d'une dent, le procédé comprenant :
la réception, par un ou plusieurs processeurs, de données de balayage en trois dimensions d'une structure dentaire supra-gingivale d'un patient ;
l'élaboration, par l'un ou plusieurs processeurs, d'un outil de personnalisation destiné à former la restauration dentaire de la dent sur la base des données de balayage en trois dimensions de la structure de dent supra-gingivale et sous-gingivale du patient, et de la structure de dent souhaitée de l'au moins une dent à restaurer du patient, dans lequel l'outil comprend :
un corps de moule pour un ajustement personnalisé spécifique au patient avec le côté facial et le côté lingual d'au moins deux dents adjacentes du patient, dans lequel le corps de moule comprend :
une première partie de moule facial (12a) pour un ajustement personnalisé spécifique au patient avec le côté facial d'une première dent du patient ;
une seconde partie de moule facial (12b) pour un ajustement personnalisé spécifique au patient avec le côté facial d'une seconde dent du patient adjacente à la première dent ;
une première partie de moule lingual (14a) pour un ajustement personnalisé spécifique au patient avec le côté lingual de la première dent du patient ;
une seconde partie de moule lingual (14b) pour un ajustement personnalisé spécifique au patient avec le côté lingual de la seconde dent du patient ; et
une première flexion incisive (28a) reliant la première partie de moule facial (12a) à la première partie de moule lingual (14a), la première flexion incisive (28a) comportant une surface de flexion conçue pour entrer en contact avec la surface incisive (60a) d'au moins une dent (52a) à, la surface de flexion fournit une surface de référence positionnelle pour la surface incisive (60a) soit de la dent restaurée prévue soit de la dent non restaurée ; dans lequel l'étape d'élaboration comporte la conception du corps de moule pour se combiner avec un film souple (30) afin de former une cavité de moule englobant la structure de dent manquante de l'au moins une dent (52a) à restaurer.

13. Procédé selon la revendication 12, dans lequel les au moins deux dents adjacentes du patient comportent une structure de dent qui existe avant la restauration, dans lequel les première et seconde parties de moule facial (12a, 12b) du corps de moule et les première et seconde parties de moule lingual (14a, 14b) du corps de moule correspondent à des parties de la structure de dent du patient qui existent avant la restauration, et dans lequel la correspondance tient compte d'une épaisseur moyenne du film souple (30).
